# EUROPÄISCHE PATENTSCHRIFT

(11) **EP 0 408 886 B1**
(45) Veröffentlichungstag und Bekanntmachung des Hinweises auf die Patenterteilung: **26.01.1994**
(21) Anmeldenummer: 90110967.8
(22) Anmeldetag: 09.06.1990
(51) Int. Cl.: G01M 17/00, G01M 9/00, B60R 19/02

(54) **Stossfänger mit einer zur Bestimmung von Seitenwindeinflüssen an Fahrzeugen dienenden Mess- und Rechneranordnung**
Fender with a measuring and computing arrangement serving for the determination of cross-wind influences on vehicles
Pare-choc avec un arrangement de mesure et de calcul servant à la détermination d'influences de vent latéral sur des véhicules

(30) Priorität: 19.07.1989 DE 3923854
(43) Veröffentlichungstag der Anmeldung: 23.01.1991
(73) Patentinhaber: DAIMLER-BENZ AKTIENGESELLSCHAFT, 70327 Stuttgart (DE)
(72) Erfinder: Van Tuan, Tran, Dr., D-7000 Stuttgart 80 (DE); Desens, Jens, D-7300 Esslingen (DE); Tiefenbacher, Rainer, D-7022 Leinfelden-Echterdingen (DE); Blume, Karl-Heinz, D-7046 Gäufelden 2 (DE)

(56) Entgegenhaltungen:
- EP-A- 0 315 497
- DE-A- 2 819 122
- DE-A- 3 512 378
- DE-C- 3 816 057

## Beschreibung

Die Erfindung betrifft einen Stoßfänger mit einer zur Bestimmung von Seitenwindeinflüssen an Fahrzeugen dienenden Meß- und Rechneranordnung.

Zur Bestimmung von Seitenwindeinflüssen an Fahrzeugen ist aus der DE-C 38 16 057 eine geeignete Vorrichtung bekannt.

Dabei wird zur Bestimmung der Windrichtung die Tatsache ausgenutzt, daß ein in üblicher Weise symmetrisch zur vertikalen Mittellängsebene geformtes Fahrzeug bei Seitenwind asymmetrisch zur vertikalen Mittellängsebene umströmt wird. Gemäß der DE-C 38 16 057 können der Grad der Asymmetrie und damit der Einfallwinkel des Seitenwindes relativ zum Fahrzeug durch Auswertung des Druckes an wenigen Meßstellen an der Außenseite des Fahrzeuges bestimmt werden. Zur Bestimmung des Staudruckes genügt dann die Ermittlung einer Druckdifferenz an zwei beidseitig des Fahrzeuges positionierten Meßstellen, wobei diese Druckdifferenz noch mit einem mit dem Einfallwinkel korrelierten Korrekturfaktor multipliziert werden muß.

Gemäß der DE-C 38 16 057 sind an der Außenseite an den jeweiligen Meßstellen bevorzugt Differenzdruckmesser angeordnet, die die Druckdifferenz zwischen ihrer nach außen weisenden Seite sowie ihrer Innenseite messen, welche mit einem allen Differenzdruckmessern gemeinsamen Referenzraum über Rohr- bzw. Schlauchleitungen verbunden ist. Der Referenzraum ist so ausgebildet bzw. angeordnet, daß gegebenenfalls in diesem Raum auftretende Druckschwankungen wesentlich langsamer verlaufen als auf der Außenseite der Differenzdruckmesser und damit außenseitig des Fahrzeuges auftretende Druckänderungen, insbesondere solche, die durch Seitenwind verursacht werden.

Hierbei wird der Tatsache Rechnung getragen, daß Differenzdruckmesser auch bei geringem konstruktiven Aufwand relativ genau arbeiten und für die Bestimmung des Einfallwinkels bzw. den Staudruck des Seitenwindes die Kenntnis der absoluten Druckwerte an den jeweiligen Meßstellen nicht erforderlich ist.

Nach der DE-C 38 16 057 sind die Meßstellen bzw. die Differenzdruckmesser vor allem im Bereich der vorderen Fahrzeugecken angeordnet, weil dort besonders große seitenwindabhängige Druckunterschiede auftreten.

Im übrigen ist gemäß dieser Patent Schrift vorgesehen, die Differenzdruckmesser nahe der nach außen führenden Mündungen der mit dem gemeinsamen Referenzraum verbundenen Rohr- bzw. Schlauchleitungen anzubringen, um zu gewährleisten, daß die Differenzdruckmesser praktisch verzögerungsfrei auf Druckänderungen der Luft an der Fahrzeugaußenseite reagieren können.

Aufgabe der Erfindung ist es nun, eine besonders vorteilhafte Konstruktion für eine Vorrichtung zur Bestimmung von Seitenwindeinflüssen an Fahrzeugen aufzuzeigen.

Diese Aufgabe wird erfindungsgemäß gelöst durch einen Stoßfänger mit einer zur Bestimmung von Seitenwindeinflüssen an Fahrzeugen dienenden Meß- und Rechneranordnung, welche bei Seitenwind auftretende Druckunterschiede zwischen asymmetrisch auf verschiedenen Fahrzeugseiten vorhandenen Meßstellen auswertet und zur Ermittlung dieser Druckunterschiede mindestens zwei im Stoßfänger angeordnete Differenzdrucksensoren aufweist, welche zwischen jeweils zwei gleichartigen, ebenfalls im Stoßfänger angeordneten Hohlleitungen angeschlossen sind, die mit ihren vom jeweiligen Differenzsensor entfernten offenen Enden bzw. Öffnungen an zueinander asymmetrischen Stellen des Stoßfängers beiderseits der Fahrzeuglängsachse nach außen münden.

Bei der Erfindung wird die überraschende Tatsache ausgenutzt, daß sich die Druckdifferenzen an den Mündungen der einem Differenzdrucksensor zugeordneten Hohlleitungen mittels des Differenzdrucksensors praktisch verzögerungsfrei bestimmen lassen, weil sich Druckänderungen an den Mündungen mit außerordentlich hoher Geschwindigkeit in den Hohlleitungen zum Differenzdrucksensor hin fortpflanzen. Bereits bei einem Innendurchmesser der Hohlleitungen von 1 mm kann - zumindest wenn, wie bei normalen Fahrzeugen, die Länge der Hohlleitungen in der Größenordnung von etwa 1 m liegt - mit einer Fortpflanzungsgeschwindigkeit der Druckänderungen in den Hohlleitungen im Bereich der Luft-Schallgeschwindigkeit gerechnet werden. Somit ermöglicht es die Erfindung, die Druckdifferenz an zwei voneinander entfernten Meßstellen mit jeweils nur einem Differenzdrucksensor zu ermitteln, so daß die Zahl der Drucksensoren auch bei einer relativ großen Anzahl von Meßstellen klein bleibt. Dementsprechend bleiben auch die Anforderungen an die Leistungsfähigkeit des Rechners bei der Auswertung der Sensorsignale relativ gering.

Durch die Anordnung der Hohlleitungen sowie der zugeordneten Sensoren an den Stoßfängern des Fahrzeuges wird darüber hinaus die Möglichkeit geschaffen, ein Kraftfahrzeug mit einer Vorrichtung zur Bestimmung von Seitenwindeinflüssen nachzurüsten, ohne daß nennenswerte Karosseriearbeiten durchgeführt werden müssen. Im übrigen bieten die Stoßfänger aller Kraftfahrzeuge hinreichend Platz, die erfindungsgemäße Vorrichtung unterzubringen, und zwar mit geringstem konstruktivem Aufwand.

Des weiteren kann es zweckmäßig sein, die Differenzdrucksensoren gemeinsam mit einem Thermoelement in einem Kasten bzw. Gehäuse oder in einem Hohlraum am Stoßfänger unterzubringen, derart, daß alle Differenzdrucksensoren etwa gleicher Temperatur ausgesetzt sind. Auf diese Weise besteht die Möglichkeit, die jeweilige Temperatur mit dem Thermoelement zu berücksichtigen und eine gegebenenfalls vorhandene Temperaturdrift der Differenzdrucksensoren auszugleichen.

Im übrigen wird hinsichtlich bevorzugter Merkmale der Erfindung auf die Ansprüche sowie die nachfolgende Erläuterung einer besonders bevorzugten Ausführungsform anhand der Zeichnung verwiesen.

Dabei zeigt
- Fig. 1: eine schematisierte Draufsicht auf einen Personenkraftwagen mit einer erfindungsgemäßen Vorrichtung zur Bestimmung von Seitenwindeinflüssen,
- Fig. 2: ein Diagramm, welches den Einfallwinkel β des Seitenwindes relativ zum Fahrzeug in Abhängigkeit von einem Differenzenquotienten D₁₄₂₃ bzw. D₂₃₁₄ wiedergibt, welcher aus den Signalen der Differenzdrucksensoren ermittelbar ist,
- Fig. 3: ein Diagramm, welches zur Berechnung des Staudruckes dienende Koeffizienten c₂₃ bzw. c₁₄ in Abhängigkeit vom Einfallwinkel β wiedergibt und
- Fig. 4: ein Diagramm, welches die Differenz der vorgenannten Koeffizienten zeigt.

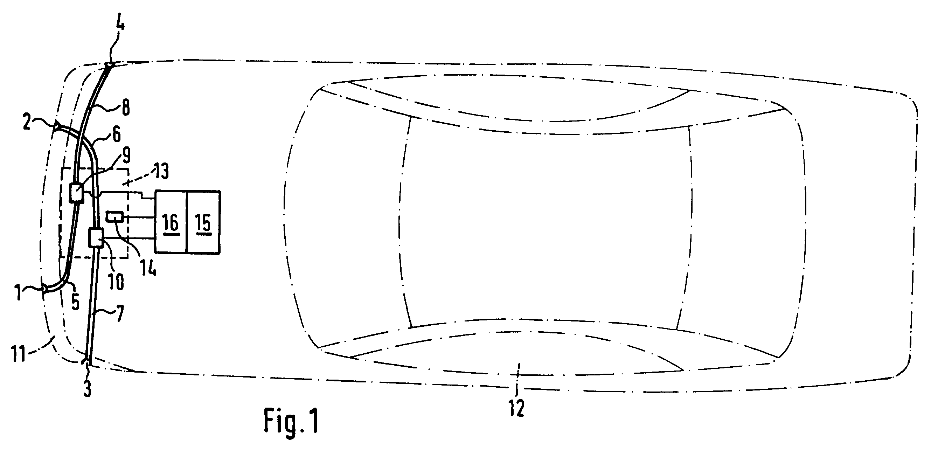

Gemäß Fig. 1 sind am vorderen Stoßfänger 11 eines Personenkraftwagens 12 symmetrisch zur vertikalen Mittellängsebene des Fahrzeuges vier Öffnungen 1 bis 4 angeordnet, an die sich Schlauch- bzw. Rohrleitungen 5 bis 8 anschließen. Die Schlauch- bzw. Rohrleitungen 5 bis 8 sind je paarweise mit Differenzdrucksensoren 9 und 10 verbunden, derart, daß der Differenzdrucksensor 9 den Differenzdruck zwischen den Schlauch- bzw. Rohrleitungen 5 und 8 und der Differenzdrucksensor 10 die Druckdifferenz zwischen den Schlauch- bzw. Rohrleitungen 6 und 7 registriert.

Die Schlauch- bzw. Rohrleitungen 5 bis 8 besitzen, ebenso wie die Öffnungen 1 bis 4,einen Innendurchmesser von ca. 1,5 mm, so daß sich Druckänderungen an den Öffnungen 1 bis 4 etwa mit Schallgeschwindigkeit zu den jeweils zugeordneten Differenzdrucksensoren 9 und 10 fortpflanzen.

Wenn davon ausgegangen wird, daß die Schlauch- bzw. Rohrleitungen 5 bis 8 jeweils ca. 70 cm lang sind, erfolgt die Fortpflanzung einer Druckänderung von einer der Öffnungen 1 bis 4 zu einem der Differenzdrucksensoren 9 und 10 jeweils innerhalb etwa 20 ms.

Die Differenzdrucksensoren 9 und 10 sind vorzugsweise innerhalb eines Gehäuses bzw. Kastens 13 am Stoßfänger 11 untergebracht. Dabei sind das Gehäuse 13 bzw. der Kasten 13 so angeordnet bzw. ausgebildet, daß beide Differenzdrucksensoren 9 und 10 jeweils einer etwa gleichen Temperatur ausgesetzt sind, welche mittels eines im Gehäuse bzw. Kasten 13 angeordneten Thermoelementes 14 registriert werden kann.

Die Signale der Differenzdrucksensoren 9 und 10 sowie des Thermoelementes 14 werden über entsprechende Signalleitungen einer Rechnereinheit 15 zugeführt, welche die genannten Signale zur Ermittlung der Seitenwindeinflüsse auswertet. Dabei dienen die Signale des Thermoelementes 14 dazu, eine eventuelle Temperaturdrift der Differenzdrucksensoren 9 und 10 rechnerisch zu kompensieren. Gegebenenfalls kann dazu auch eine gesonderte Schaltungseinheit 16 dienen, welche den Einfluß der Umgebungstemperatur auf die Differenzdrucksensoren 9 und 10 in Abhängigkeit von den Signalen des Thermoelementes 14 kompensiert, so daß die Rechnereinheit 15 lediglich solche Signale erhält, welche die Druckdifferenzen an den Differenzdrucksensoren 9 und 10 weitestgehend frei von Temperatureinflüssen wiedergeben.

Mit der in Fig. 1 dargestellten Anordnung lassen sich die Einflüsse solcher Seitenwinde bestimmen, die eine der Fahrtrichtung des Fahrzeuges bei Vorwärtsfahrt entgegengerichtete Komponente aufweisen und zur Fahrzeuglängsachse einen Winkel zwischen +70° und -70° bilden.

Dies wird nachfolgend erläutert.

Der Differenzdrucksensor 9 mißt die Druckdifferenz p₁₄ zwischen den Drucken an den Öffnungen 1 und 4; der Differenzdrucksensor 10 mißt die Druckdifferenz p₂₃ zwischen den Öffnungen 2 und 3. Zunächst wird die Differenz p₁₄-p₂₃ berechnet. Wenn die Fahrzeugkarosserie zur vertikalen Mittellängsebene derselben hinreichend symmetrisch ist, hat diese Differenz den Wert Null, wenn die Windrichtung mit der Fahrzeuglängsachse übereinstimmt. Falls der Wind bei dem Fahrzeug in Fig. 1 von schräg rechts vorne kommt, d.h. wenn der Einfallwinkel β positive Werte aufweist, hat dann die genannte Differenz positive Werte; bei negativen Werten des Einfallwinkels β, d.h. wenn der Wind von vorn schräg links auf das Fahrzeug einwirkt, wird die genannte Differenz negativ.

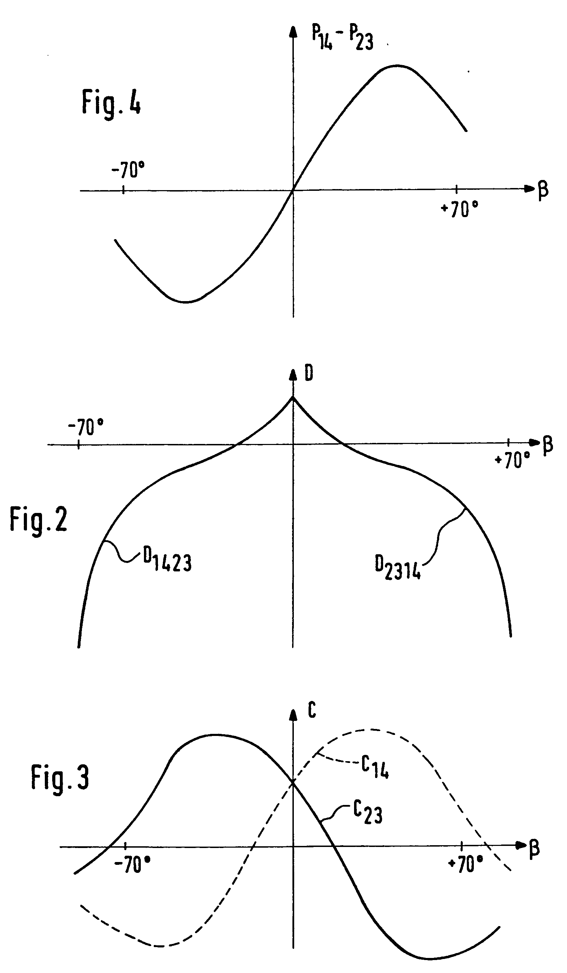

Ein typischer Verlauf der Differenz p₁₄-p₂₃ in Abhängigkeit vom Einfallwinkel β ist in Fig. 4 dargestellt.

Wenn die Differenz p₁₄-p₂₃ positiv ist, d.h. bei Wind von rechts, wird der Differenzenquotient D₂₃₁₄ = p₂₃/p₁₄ ermittelt; falls die genannte Differenz negativ ist, d.h. bei von links auf das Fahrzeug einfallendem Wind, wird der Differenzenquotient D₁₄₂₃ = p₁₄/p₂₃ bestimmt.

Die Werte der genannten Differenzenquotienten ändern sich mit der Größe des Einfallwinkels β, wie es in Fig. 2 beispielhaft dargestellt ist. Dabei hängt der Verlauf der die Differenzenquotienten D₁₄₂₃ bzw. D₂₃₁₄ wiedergebenden Kurven von der Form des jeweiligen Fahrzeuges ab.

Indem also in einem Speicher der Rechnereinheit 15 den möglichen Werten der Differenzenquotienten D₁₄₂₃ bzw. D₂₃₁₄ die jeweiligen Einfallwinkel β entsprechend der Form der jeweiligen Karosserie zugeordnet sind, kann die Rechnereinheit 15 den jeweiligen Einfallwinkel β durch Berechnung der vorgenannten Differenzenquotienten ermitteln.

Nunmehr kann auch der jeweils vom Wind auf das Fahrzeug ausgeübte Staudruck ermittelt werden:

Dazu wird der dem jeweils vorher ermittelten Wert des Einfallwinkels β zugeordnete Wert der Druckdifferenz p₁₄ bzw. p₂₃ mit einem Beiwert c₁₄ bzw. c₂₃ dividiert dessen Größe lediglich von dem jeweiligen Wert des Einfallwinkels β (sowie der Form der jeweiligen Karosserie) abhängt. In Fig. 3 ist ein typischer Verlauf der Beiwerte c₁₄ bzw. c₂₃ in Abhängigkeit vom Einfallwinkel β dargestellt.

Aufgrund des jeweils ermittelten Staudruckes kann die Rechnereinheit 15 Lenkmanöver rechnerisch ermitteln, mit denen der Seitenwindeinfluß weitestgehend kompensiert werden kann. Durch entsprechende Ansteuerung von Stellorganen einer automatischen Lenkung des Fahrzeuges, z.B. einer automatischen Hinterradlenkung, kann dann der Seitenwindeinfluß zumindest so weit ausgeglichen werden, daß dem Fahrer die Beherrschung des Fahrzeuges auch bei sehr starken Seitenwinden und hohen Fahrgeschwindigkeiten wesentlich erleichtert wird.

Im Hinblick auf eine ausgeprägte Abhängigkeit der von den Differenzdrucksensoren 8 und 9 registrierten Druckdifferenzen vom Einfallwinkel β des Seitenwindes ist es vorteilhaft, wenn die Öffnungen 1 und 2 in der in Fig. 1 dargestellten Weise in Fahrzeuglängsrichtung nach vorn geöffnet sind, während die Öffnungen 3 und 4 zu den Fahrzeugseiten hin gerichtet, jedoch nahe der Fahrzeugfrontseite bzw. an den vorderen Fahrzeugecken angeordnet sind.

Zwar ist es vorteilhaft, wenn die Öffnungen 1 und 3 sowie 2 und 4 symmetrisch zur vertikalen Mittellängsebene des Fahrzeuges angeordnet sind, weil dann die Differenz p₁₄ - p₂₃ bei zu dieser Ebene symmetrischer Anströmung bzw. Umströmung des (zu dieser Ebene symmetrischen) Fahrzeuges den Wert Null hat. Jedoch ist es grundsätzlich auch möglich, die Öffnungen unsymmetrisch anzuordnen. In diesem Falle muß lediglich in Kauf genommen werden, daß die genannte Differenz bei einer bestimmten, schräg zur Fahrzeuglängsachse ausgerichteten Windrichtung den Wert Null hat, während beim Zusammenfallen von Fahrzeuglängsachse und Windrichtung für die genannte Differenz ein von Null abweichender Wert erhalten wird. Dadurch ändert sich prinzipiell nichts an der Arbeitsweise der Vorrichtung.

## Patentansprüche

1. Stoßfänger (11) mit einer zur Bestimmung von Seitenwindeinflüssen an Fahrzeugen dienenden Meß- und Rechneranordnung (15), welche bei Seitenwind auftretende Druckunterschiede zwischen asymmetrisch auf verschiedenen Fahrzeugseiten vorhandenen Meßstellen (Öffnungen 1 bis 4) auswertet und zur Ermittlung dieser Druckunterschiede (P₂₃) mindestens zwei im Stoßfänger (11) angeordnete Differenzdrucksensoren (9,10) aufweist, welche zwischen jeweils zwei gleichartigen, ebenfalls im Stoßfänger (11) angeordneten Hohlleitungen (5 bis 8) angeschlossen sind, die mit ihren vom jeweiligen Differenzdrucksensor (9,10) entfernten offenen Enden bzw. Öffnungen (1 bis 4) an zueinander asymmetrischen Stellen des Stoßfängers (11) beiderseits der Fahrzeuglängsachse nach außen münden.

2. Stoßfänger nach Anspruch 1,
**dadurch** **gekennzeichnet**,
daß die Differenzdrucksensoren (9,10) gemeinsam mit einem Thermoelement (14) in einem Kasten bzw. Gehäuse (13) oder einem Hohlraum im Stoßfänger (11) untergebracht sind, derart, daß alle Differenzdrucksensoren etwa gleicher Temperatur ausgesetzt sind und eine etwa gleiche Temperaturdrift aufweisen.

3. Stoßfänger nach Anspruch 1 oder 2,
**dadurch** **gekennzeichnet**,
daß der Innendurchmesser der Hohlleitungen (5 bis 8) bzw. der Öffnungen (1 bis 4) größer als 1 mm ist und z.B. bei 1,5 mm liegt.

4. Stoßfänger nach einem der Ansprüche 1 bis 3,
**dadurch** **gekennzeichnet**,
daß die Hohlleitungen (5 bis 8) durch Hohlräume im Stoßfänger (11) gebildet werden, welche jeweils durch eine Öffnung (1 bis 4) nach außen münden.

## Claims

1. Bumper (11) having a measuring and computing arrangement (15) for determining crosswind effects on vehicles, which arrangement (15) evaluates pressure differences occurring in the case of a crosswind between measuring points (openings 1 to 4) present asymmetrically on different sides of the vehicle and, to determine these pressure differences (p₂₃), has at least two differential pressure sensors (9, 10), arranged in the bumper (11), which are connected between in each case two conduits (5 to 8) of the same type, likewise arranged in the bumper (11), which, with their open ends or openings (1 to 4) remote from the respective differential pressure sensor (9, 10), open to the outside at mutually asymmetric points of the bumper (11) on both sides of the longitudinal axis of the vehicle.

2. Bumper according to Claim 1, characterized in that the differential pressure sensors (9, 10) are accommodated together with a thermocouple (14) in a box or housing (13) or a hollow in the bumper (11), such that all differential pressure sensors are exposed to approximately the same temperature and have approximately the same temperature drift.

3. Bumper according to Claim 1 or 2, characterized in that the inside diameter of the conduits (5 to 8) and of the openings (1 to 4) is greater than 1 mm and is, for example, 1.5 mm.

4. Bumper according to one of Claims 1 to 3, characterized in that the conduits (5 to 8) are formed by hollows in the bumper (11), each of which opens to the outside through an opening (1 to 4).

## Revendications

1. Pare-chocs (11), avec un agencement de mesure et de calcul (15) servant à la détermination d'influences du vent latéral sur des véhicules, exploitant, en cas de vent latéral, la différence de pression se manifestant entre des point de mesure (orifices de mesure) placés asymétriquement sur des côtés différents du véhicule, et présentent, en vue de la détermination de ces différences de pression (P₂₃), au moins deux capteurs de pression différentielle (9, 10) disposés dans le pare-chocs (11) et raccordés, chaque fois entre deux conduites creuses (5 à 8) de même type, également disposées dans le pare-chocs (11) et débouchant vers l'extérieur, par leurs extrémités ou orifices (1 à 4) ouverts éloignés du capteur de pression différentielle (9, 10) respectif, en des endroits mutuellement asymétriques du pare-chocs (11), des deux côtés de l'axe longitudinal du véhicule.

2. Pare-chocs selon la revendication 1, caractérisé en ce que les capteurs de pression différentielle (9, 10) sont logés, conjointement avec un thermoélément (14), dans un caisson ou un boîtier (13), ou un espace creux ménagé dans le pare-chocs (11), de manière que tous les capteurs de pression différentielle soient exposés à peu près à la même température et présentent une dérive de température à peu près identique.

3. Pare-chocs selon la revendication 1 ou 2, caractérisé en ce que le diamètre intérieur des conduites creuses (5 à 8), respectivement des ouvertures (1 à 4) est supérieur à 1 mm, et est par exemple de 1,5 mm.

4. Pare-chocs selon l'une des revendications 1 à 3, caractérisé en ce que les conduites creuses (5 à 8) sont formées par des espaces creux ménagés dans le pare-chocs (11), débouchant chacun vers l'extérieur au moyen d'une ouverture (1 à 4).
